# EUROPÄISCHE PATENTSCHRIFT

(11) **EP 4 382 673 B1**
(45) Veröffentlichungstag und Bekanntmachung des Hinweises auf die Patenterteilung: **04.06.2025**
(21) Anmeldenummer: 22211666.7
(22) Anmeldetag: 06.12.2022
(51) Int. Cl.: E02D 3/054, E02D 3/10, E02D 7/18, E02D 13/06, E02D 17/13

(54) **VERFAHREN ZUM BETREIBEN EINER TIEFBAUMASCHINE**
METHOD FOR OPERATING A CIVIL ENGINEERING MACHINE
PROCÉDÉ DE FONCTIONNEMENT D'UN ENGIN DE GÉNIE CIVIL

(43) Veröffentlichungstag der Anmeldung: 12.06.2024
(73) Patentinhaber: BAUER Maschinen GmbH, 86529 Schrobenhausen (DE)
(72) Erfinder: Bauer, Sebastian, 86529 Schrobenhausen (DE); Bruederle, Peter, 85123 Karlskron (DE); Gruber, Josef, 86684 Holzheim (DE); Schober, Andreas, 86637 Wertingen (DE)
(74) Vertreter: Wunderlich & Heim Patentanwälte PartG mbB

(56) Entgegenhaltungen:
- EP-A1- 3 854 943
- EP-A1- 3 907 371
- EP-A1- 4 063 567
- ES-A1- 2 413 909

## Beschreibung

Die Erfindung betrifft ein Verfahren zum Betreiben einer Tiefbaumaschine, welche ein mobiles Trägergerät mit einem Mast oder Auslegerarm aufweist, welcher an dem Trägergerät angeordnet ist, nach dem Anspruch 1.

Die Erfindung betrifft des Weiteren eine Anordnung mit einer Tiefbaumaschine mit einem mobilen Trägergerät, einem Mast oder Auslegerarm, welcher an dem Trägergerät angeordnet ist, sowie einem Tiefbauwerkzeug, welches zum Ausführen einer Tiefbaumaßnahme an dem Mast oder Auslegerarm verstellbar ist, nach dem Anspruch 11.

Bei der Tiefbaumaschine kann es sich beispielsweise um eine Schlitzwandfräse, eine Ramme, einen Seilbagger, einen Greiferbagger, aber auch um einen Mobilkran beziehungsweise einen mobilen Auslegerkran handeln. Bei dem Zustand kann es sich beispielsweise um einen fehlerhaften Zustand handeln, der oft einen sofortigen Eingriff notwendig macht, aber auch um einen Zustand, der lediglich bei der nächsten Wartung oder am Arbeitsende behoben werden sollte. Auch kann der Hinweis nur einen allgemeinen Hinweis auf einen Zustand sein, der nicht optimal ist, aber unproblematisch. Die Bewertung, ob ein Hinweis ausgegeben werden soll, kann insbesondere zuvor für mögliche Zustände festgelegt werden.

Tiefbaumaschinen insbesondere zum Erstellen von Gründungen im Boden sind seit langem bekannt. Ein Gründungselement kann dabei beispielsweise durch Erstellen eines Loches im Boden, etwa eines Bohrloches oder eines Frässchlitzes, gebildet werden, wobei das Loch anschließend zum Bilden eines Gründungspfahles oder eines Schlitzwandsegmentes gegebenenfalls mit einer zusätzlichen Armierung mit einem aushärtbaren Medium, insbesondere einem Mörtel, verfüllt wird. Ein Gründungselement kann auch durch Einrammen oder Einrütteln, etwa eines Gründungspfahles oder einer Bohle erfolgen. Ein Gründungselement ist dabei nicht auf eine Lastaufnahme oder eine Tragfähigkeitsfunktion beschränkt, sondern kann alternativ oder ergänzend auch eine Dichtfunktion und oder andere Aufgaben übernehmen, wie es etwa bei Baugrubenumschließungen mit Dichtwänden aus dem Spezialtiefbau bekannt ist.

Bekannte Tiefbaumaschinen sind heutzutage mit elektronischen Steuereinheiten versehen, welche den Betrieb der Tiefbaumaschine für einen Maschinenbediener erleichtern oder sogar teil- oder vollautomatisch übernehmen können. Über Sensoren können verschiedene Betriebsdaten erfasst und der Steuereinheit zugeleitet werden. Über entsprechende Datenleitungen können Steuerbefehle an entsprechende Aktoren, insbesondere Antriebe und Stellzylinder, ausgegeben werden.

Derartige Tiefbaumaschinen sind beispielsweise aus der EP 3299523 A1, der EP 3296467 A1 oder auch der EP 4 063 567 A1 bekannt.

Bei derartigen Tiefbaumaschinen kann mit Hilfe der Steuereinheit ein Betriebszustand erkannt werden, der eine Aktion des Maschinenbedieners erfordert. Weitere Details zu diesem Zustand können oft nur mittels eines speziellen Analysegerätes ausgelesen werden. Hierdurch ist es erforderlich, dass Analysegerät anzuschließen und die entsprechenden Informationen aus der Steuereinheit auszulesen. Alternativ müssen sie in einer Betriebsanleitung oder Wartungsanleitung nachgeschlagen werde.

Dies ist jedoch umständlich und nimmt Zeit in Anspruch, die zum Betrieb der Tiefbaumaschine wegfällt.

Der Erfindung liegt daher die **Aufgabe** zugrunde, ein Verfahren zum Betreiben einer Tiefbaumaschine sowie eine Tiefbaumaschine anzugeben, welche eine effiziente Übermittlung von Hinweisen ermöglicht.

Diese Aufgabe wird erfindungsgemäß durch ein Verfahren mit den Merkmalen des Anspruchs 1 sowie eine Anordnung mit den Merkmalen des Anspruchs 11 gelöst.

Bevorzugte Ausführungsformen der Erfindung sind in den abhängigen Ansprüchen, den Figuren und deren Beschreibung angegeben.

Das erfindungsgemäße Verfahren ist dadurch weitergebildet, dass durch die Steuereinheit bei einem Hinweis automatisch oder auf Aufforderung eines Maschinenbedieners ein graphisches Datencodeelement, insbesondere ein Barcode, ein Pixelcode oder Ähnliches zu dem festgestellten Zustand erzeugt und auf einer Anzeigeeinrichtung, welche beispielsweise ein Monitor sein kann, ausgegeben wird. Ferner ist vorgesehen, dass das optische Datencodeelement mit einer elektronischen Kamera einer mobilen Computereinheit, insbesondere einem Smartphone oder einem Tabletcomputer erfasst wird, wobei durch die mobile Computereinheit basierend auf den erfassten graphischen Datencodeelementen weitere Informationen zu dem Zustand ausgegeben werden.

Bei einem optischen Datencodeelement entsprechend der Erfindung handelt es sich bevorzugt nicht um eine numerische, alphabethische oder alphanumerische Anzeige, die von einem Maschinenbediener bereits interpretiert werden kann. Anders ausgedrückt, wird nicht eine für den Menschen per se interpretierbare Information, wie es bei einer klassischen Fehlermeldung der Fall ist, angezeigt.

Dies hat den Grund, dass wenn derartige Meldungen detailliert genug sein sollen, sie derart ausführlich sind, dass der Platz auf der Anzeigeeinrichtung hierfür oft nicht ausreicht.

Daher wurde entsprechend der Erfindung erkannt, den Hinweis, insbesondere den Fehlerhinweis, in Form eines graphischen Datencodeelementes anzuzeigen. Der Informationsinhalt und die Codierung dieses graphischen Datencodeelementes ist derart ausgestaltet, dass das Datencodeelement maschinenlesbar ist und interpretiert werden kann. Hierzu ist entsprechend der Erfindung eine mobile Computereinheit vorgesehen, die in Verbindung mit einer Kamera das graphische Datencodeelement erkennen und dekodieren kann und basierend auf so von der Steuereinheit übermittelten Information detaillierter Information zu dem Zustand ausgeben kann. Dies kann beispielsweise auf dem Monitor der mobilen Computereinheit erfolgen.

So kann beispielsweise das graphischen Datencodeelement von der mobilen Computereinheit derart interpretiert werden, dass die Steuereinheit festgestellt hat, dass eine bestimmte Wartungsklappe nicht zuverlässig geschlossen ist. Herkömmlicherweise hätte über ein entsprechendes Warnsignal und/oder eine Kontrollleuchte nur angezeigt werden können, dass generell etwas nicht stimmt oder, dass irgendeine Wartungsklappe nicht geschlossen ist, so dass der Benutzer selbst auf die detaillierte Fehlersuche gehen musste.

Bevorzugt ist es, wenn die mobile Computereinheit einen Datenspeicher aufweist, auf welchem Informationen zu Zuständen gespeichert sind und beim Erfassen einen dazugehörigen graphischen Datencodeelementes aus dem Datenspeicher abgerufen und auf der mobilen Computereinheit oder einer anderen, insbesondere mit der mobilen Computereinheit in Verbindung stehenden, Anzeigeeinrichtung angezeigt werden. Zusätzlich oder alternativ hierzu kann es auch vorgesehen sein, dass die mobile Computereinheit eine Funkverbindungseinrichtung, insbesondere für einen Mobilfunk, aufweist, mit welcher eine Verbindung zu einem entfernten Datenspeicher hergestellt wird, aus welchem Informationen zu dem festgestellten Zustand abgerufen werden.

Anders ausgedrückt, wird mittels des graphischen Datencodeelementes von der Steuereinheit eine Art Zustandscode erzeugt, der von der mobilen Computereinheit interpretiert werden kann. Um weitere Informationen zu dem entsprechenden Zustandscode auszugeben, greift die mobile Computereinheit dann entweder auf einen lokalen Speicher oder auf einen entfernt angeordneten Speicher zurück, auf den beispielsweise über ein Funknetzwerk zugegriffen werden kann. Basierend auf diesen Daten können dann weitere Details zu dem Zustand auf der mobilen Computereinheit angezeigt werden. Beispielsweise könnte auch ein Video abgerufen werden, in dem weitere Informationen zur Lösung oder Behebung des Zustandes angegeben werden. Auch ein kombinierter Aufruf von Informationen aus einem lokalen und einem entfernten Speicher ist möglich.

In einer weiteren Ausführungsform, die auch in Kombination mit den oben ausgeführten Ausführungsformen verwendet werden kann, sind in dem graphischen Datencodeelement bereits unmittelbar Daten zu dem festgestellten Zustand hinterlegt. In diesem Fall würde die mobile Computereinheit lediglich diese Daten aus dem graphischen Datencodeelement decodieren und für den Benutzer in einer geeigneten Weise wiedergeben. Dies kann sowohl akustisch wie auch graphisch erfolgen. Der Vorteil einer derartigen Ausführung ist, dass hierfür kein zusätzlicher Datenspeicher, entfernt oder auf der mobilen Computereinheit, vorhanden sein muss, der die notwendigen Informationen enthält.

In einer weiteren Ausführungsform kann das graphische Datencodeelement Daten zu einem Internet-Link enthalten, über welchen mittels der mobilen Computereinheit weitere Informationen zu dem festgestellten Zustand aus einem entfernten Speicher abgefragt werden können. Bei diesem Link kann es sich beispielsweise um eine Web-Adresse, eine URL- oder eine IP-Adresse mit weiterer Verzeichnisstruktur handeln. Hierbei ist es beispielsweise auch möglich, in ähnlicher Weise wie zuvor beschrieben, Anweisungen, Anleitungen, Erklärungen, Wizards oder dergleichen anzuzeigen, welche den Zustand genau erläutern beziehungsweise erklären, wie er behoben oder geändert werden kann. Auch ist es beispielsweise möglich, dass der Internet-Link auf weitere Informationen verweist, die online bezüglich der Tiefbaumaschine zur Verfügung stehen, so dass eine bessere Fehleranalyse möglich ist. Dies ist besonders dann möglich, wenn aktiv Daten der Tiefbaumaschine an einen zentralen Rechner übertragen werden, beispielsweise für Wartungszwecke oder dergleichen.

Bevorzugt ist es, wenn die weiteren Informationen zu einer Zustandsursache und/oder zum Beheben des festgestellten Zustandes umfassen. Dies ermöglicht insbesondere eine schnelle und effiziente Behebung der Zustands-, insbesondere einer Fehlerursache, so dass die Ausfallzeit der Tiefbaumaschine minimiert werden kann. Auch erleichtert es das Beheben des Zustandes, so dass dieser von weniger erfahrenen Benutzern ebenfalls leicht behoben werden kann.

Bevorzugt ist es, wenn die weiteren Informationen Texte, Graphiken, Bilder, Audio- und/oder Videodaten umfassen. Hierbei kann je nach mobiler Computereinheit aber auch je nach Zustand eine geeignete Ausgabeart gewählt werden, welche es dem Maschinenbediener ermöglicht, den Zustand möglichst einfach zu verstehen und die Ursache zu beheben.

Grundsätzlich können die weiteren Informationen auf der mobilen Computereinheit beliebig ausgegeben werden. Besonders einfach ist es, wenn diese auf einem Display der mobilen Computereinheit optisch angezeigt und/oder auf einem Lautsprecher akustisch ausgegeben werden. Grundsätzlich sind jedoch auch andere Feedbackarten möglich, wobei erfahrungsgemäß eine optische und akustische Ausgabe der weiteren Informationen der effizienteste Weg ist. Hierzu können auch mit der mobilen Computereinheit in Verbindung stehende weitere Ausgabeeinrichtungen, wie Lautsprechern, Datenbrillen oder externe Bildschirme verwendet werden.

Vorteilhaft ist es, wenn die mobile Computereinheit nach dem Erfassen des graphischen Datencodeelementes zum Beheben des festgestellten Zustandes, insbesondere an einem Ort außerhalb des Betriebsstandes, mitgeführt wird. Durch das Nutzen der mobilen Computereinheit wird ein Beheben der Zustandsursache erleichtert. Beispielsweise kann, wenn durch die Steuereinheit festgestellt wurde, dass nicht ausreichend Motoröl vorhanden ist, auf der mobilen Computereinheit die exakte Position des Einfallstutzens für das Motoröl im Motorbereich dargestellt werden. Um diesen leichter zuordnen zu können, ist es entsprechend der Erfindung vorgesehen, die mobile Computereinheit mit zum Motorbereich der Tiefbaumaschine zu nehmen, so dass eine leichtere Zuordnung möglich ist. Auch kann die Kamera verwendet werden, um eine Augmented-Reality-Anzeige zu erzeugen.

Grundsätzlich können verschiedene graphische Datencodeelemente eingesetzt werden, die einen ein-, zwei- oder mehrdimensionalen Code beinhalten. Beispiel hierfür sind ein Pixelcode, insbesondere ein QR-Code, ein Frame-Code, ein Aztec-Code oder Ähnliches. Auch können Kombinationen hiervon verwendet werden, beispielsweise ein QR-Code, welcher als zusätzliche Dimension farbige Pixel aufweist. Erfahrungsgemäß haben sich derartige Codeelemente als zum einen leicht mittels einer Kamera auslesbar herausgestellt, zum anderen bieten sie eine ausreichend hohe Informationsdichte, so dass ausreichend Daten an die mobile Computereinheit übermittelt werden können. Abhängig von der exakten Größe können beim klassischen QR-Code so beispielsweise bis zu beinahe drei Kilobyte codiert werden.

Bei der erfindungsgemäßen Anordnung mit einer Tiefbaumaschine ist vorgesehen, dass die Steuereinheit ausgebildet ist, bei einem Hinweis automatisch oder auf Anforderung eines Maschinenbedieners ein graphisches Datencodeelement, insbesondere einen Barcode oder Pixelcode zu dem festgestellten Zustand zu erzeugen und auf einer Anzeigeeinrichtung anzuzeigen. Dabei kann das optische Datencodeelement mit einer elektronischen Kamera einer mobilen Computereinheit, insbesondere eines Smartphones oder eines Tabletcomputers, erfassbar sein, wobei die mobile Datencomputereinheit ausgebildet ist, basierend auf dem erfassten graphischen Datencodeelement weiter Informationen zu dem festgestellten Zustand anzuzeigen.

In seiner allgemeinsten Form kann auch auf der mobilen Computereinheit eine entsprechende App, beispielsweise des Herstellers der Tiefbaumaschine, vorhanden sein, die das graphische Datencodeelement auswerten und somit decodieren kann, so dass Informationen zu dem festgestellten Zustand angezeigt werden können. Es kann sich hierbei auch um eine Anzeigeeinrichtung in Form eines Tabletcomputers handeln, der Teil der Tiefbaumaschine ist und in deren Führerstand normalerweise angeordnet ist. Grundsätzlich kann jedoch auch beispielsweise ein sog. Smartphone des Maschinenbedieners hierfür verwendet werden.

Bei der Tiefbaumaschine kann es sich beispielsweise um ein Bohrgerät, eine Schlitzwandfräsvorrichtung, eine Ramme, einen Seilbagger, einen Greiferbagger und/oder einen Rüttler handeln. Bei Tiefbaumaschinen wird aufgrund ihrer zunehmenden Komplexität die Suche und das Beheben oder Abändern eines Zustandes, wie eines Fehlers, immer komplizierter, so dass - basierend auf dem erfindungsgemäßen Verfahren - bei einer derart ausgebildeten Tiefbaumaschine die Effizienz der Suche nach dem Grund des ungewollten Zustandes und das Beheben dieses mit der Erfindung deutlich vereinfacht werden kann.

Die Erfindung betrifft noch eine Anordnung, aufweisend eine Tiefbaumaschine, wie zuvor beschrieben, und mindestens eine mobile Computereinheit, welche ausgebildet ist, ein graphischen Datencodeelement, welches von der Steuereinheit zu einem Zustand, auf einer Anzeigeeinrichtung, insbesondere einem Monitor der Tiefbaumaschine erzeugt ist, zu erfassen und basierend auf dem erfassten graphischen Datencodeelement weitere Informationen hierzu anzuzeigen.

Durch die Kombination der Tiefbaumaschine mit einer entsprechenden mobilen Computereinheit ist es somit für einen Maschinenbediener einfach, von der Steuereinheit der Tiefbaumaschine festgestellte Zustände, insbesondere Zustände, die ein externes Eingreifen erfordern, mit allen ihren Details angezeigt zu bekommen. Zu diesem Zweck zeigt die Anzeigeeinrichtung selbständig oder auf Aufforderung ein graphisches Datencodeelement zu dem Zustand an, welches mittels der Kamera der mobilen Computereinheit ausgelesen werden kann. In der mobilen Computereinheit wird das graphisch dargestellte Datencodeelement decodiert und basierend auf den übertragenen beziehungsweise decodierten Informationen weitere Informationen zu dem Zustand angezeigt. Hierbei kann es sich beispielsweise um eine Fehlerursache, aber auch um die Informationen zum Beheben des Fehlers handeln.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Seitenansicht einer Tiefbaumaschine für die Erfindung und
- Fig. 2: eine schematische Darstellung des erfindungsgemäßen Verfahrens.

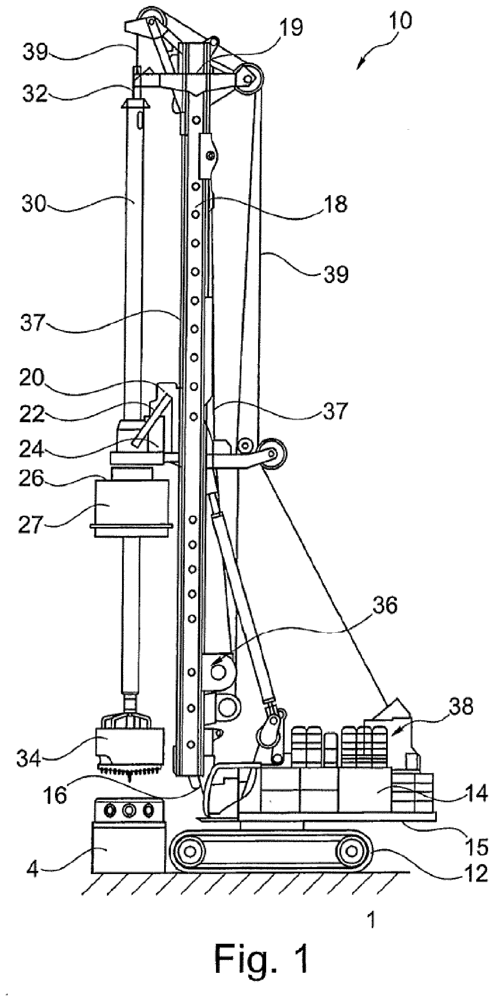

Eine Tiefbaumaschine 10 für die Erfindung, welche beispielhaft als ein Bohrgerät gemäß Fig. 1 ausgebildet ist, weist einen vorzugsweise als Raupenfahrwerk ausgebildeten Unterwagen 12 und einen darauf drehbar gelagerten Oberwagen 14 auf. Der Unterwagen 12 und der Oberwagen 14 bilden ein Trägergerät 15. An dem Oberwagen 14 können in bekannter Weise die Antriebsaggregate und der Bedienstand für einen Maschinenbediener der Tiefbaumaschine 10 angeordnet sein. In dem Bedienstand können eine Steuereinheit 40 und eine Anzeigeeinrichtung 50, insbesondere ein Monitor, angeordnet sein.

An einer Vorderseite des Oberwagens 14 kann über eine Anlenkkinematik 16 mit Nackenzylindern ein im wesentlichen vertikaler Mast 18 mit einem oberen Mastkopf 19 verstellbar angebracht sein. Entlang einer Vorderseite des Mastes 18 kann ein Schlitten 20 verschiebbar geführt werden. Auf dem Schlitten 20 kann ein erster Bohrantrieb 22 vorgesehen, welcher einen Hydraulikmotor 24 aufweisen kann. Weiterhin kann an dem Schlitten 20 ein zweiter Antrieb 26 mit einer hülsenförmigen Drehverbindung 27 zum Herstellen einer drehfesten Verbindung zu einem Stützrohr 4 vorgesehen sein. Der zweite Antrieb 26 kann beispielsweise im Wesentlichen aus einer Getriebeverbindung zu dem ersten Bohrantrieb 22 mit dem Hydraulikmotor 24 bestehen, um so ein Drehmoment auf die Drehverbindung 27 und damit das Stützrohr 4 aufzubringen.

Der etwa hülsenförmige erste Bohrantrieb 22 kann beispielhaft von einem Bohrgestänge 30 durchdrungen werden, welches als ein Kellygestänge mit äußeren Mitnehmerleisten ausgebildet sein kann. Hierbei kann das Bohrgestänge 30 eine obere Aufhängung 32 aufweisen, mit welcher das Bohrgestänge 30 mit einem Hauptseil 39 verbunden ist. Das Hauptseil 39 kann über Umlenkrollen am Mastkopf 19 zu einer Hauptwinde 38 an der Oberseite des Oberwagens 14 geführt sein. Durch Betätigen der Hauptwinde 38 kann das Bohrgestänge 30 vertikal bewegt werden.

Der Schlitten 20 kann mit einem Vorschubseil 37 verbunden sein, welches oberhalb und unterhalb des Schlittens 20 entlang des Mastes 18 geführt und von einer Vorschubwinde 36 betätigt werden kann. Durch die Vorschubwinde 36 kann der Schlitten 20 entlang einer Führung des Mastes 18 nach oben oder unten bewegt werden.

An einer Unterseite des Bohrgestänges 30 ist ein Bohrwerkzeug als Tiefbauwerkzeug 34 zum Abtragen von Bodenmaterial angebracht. Das Tiefbauwerkzeug 34 ist in dem dargestellten Ausführungsbeispiel nach Fig. 1 als ein Bohreimer ausgeführt. Der Durchmesser des Bohrwerkzeuges ist dabei so ausgebildet, dass dieses in den inneren Hohlraum des Stützrohres 4 eingeführt werden kann.

Mit der Tiefbaumaschine 10 kann eine verrohrte Bohrung im Boden 1 erstellt werden. Zum Bilden eines Gründungselementes im Boden 1 kann in die Bohrung eine aushärtbare Masse eingeleitet werden, welche dann zum Gründungselement aushärtet. Das Stützrohr 4 kann in der Bohrung als Teil des Gründungselementes verbleiben oder vorzugsweise vor einem Aushärten aus dem Boden 1 gezogen werden.

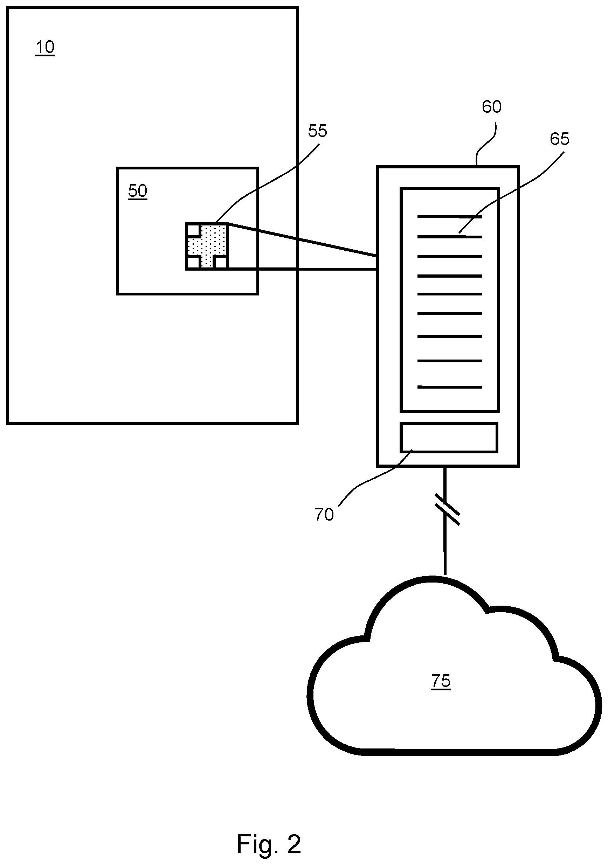

Figur 2 zeigt eine schematische Darstellung einer Tiefbaumaschine 10 mit Anzeigeeinrichtung 50.

Tritt nun ein Zustand, insbesondere ein Fehler, während des Betriebes der Tiefbaumaschine 10 ein, der beispielsweise eine Handlung des Maschinenbedieners erfordert, so kann auf Aufforderung oder selbständig auf der Anzeigeeinrichtung 50 ein graphisches Datencodeelement 55 angezeigt werden, welches insbesondere aktive in Bezug auf den Fehler generiert wird. In der hier dargestellten Form handelt es sich um einen QR-Code.

Dieser kann anschließend von einem Maschinenbediener mittels eines mobilen Computers 60, beispielsweise eines Smartphones, über dessen Kamera ausgelesen werden. Das Smartphone interpretiert die Informationen, die in dem graphischen Datencodeelement codiert sind und kann so weitere Informationen und Details zu dem Zustand erhalten. Basierend auf diesen Informationen kann es weitere Details 65 zu dem Zustand auf seinem Display anzeigen.

Diese Informationen können direkt in dem QR-Code 55 vorhanden sein. Alternativ oder zusätzlich ist es auch möglich, dass in dem graphischen Codeelement 55 Informationen codiert sind, die mittels eines auf dem Smartphone 60 vorhandenen Mobilspeichers 70 interpretiert werden können und hieraus dann die Details 65 dargestellt werden können. Alternativ oder zusätzlich, kann auch ein weiterer Datenspeicher entfernt angeordnet sein und über eine Funkverbindung beispielsweise im Internet 75 abgefragt werden.

Die in dieser Ausführungsform in Figur 2 dargestellten Details beziehungsweise Informationen zu einem Zustand sind als Text dargestellt. Alternative Ausführungen, die auch kombiniert miteinander verwendet werden können, sind aber auch Darstellungen als Video, akustische Ausgabe und/oder Bilder.

Mit der Erfindung kann so das Beheben eines ungewollten Zustandes bei einer Tiefbaumaschine erleichtert werden.

## Patentansprüche

1. Verfahren zum Betreiben einer Tiefbaumaschine (10) mit
- einem mobilen Trägergerät (15),
- einem Mast (18) oder Auslegerarm, welcher an dem Trägergerät (15) angeordnet ist,
- einem Tiefbauwerkzeug (34), welches zum Ausführen einer Tiefbaumaßnahme an dem Mast (18) oder Auslegerarm verstellbar ist,
- einer Steuereinheit (40), welche zum Bewerten von erfassten Betriebszuständen und/oder Zuständen von Komponenten der Tiefbaumaschine (10) ausgebildet ist, wobei durch die Steuereinheit (40) ein Hinweis, insbesondere ein Fehlerhinweis, ausgegeben wird, wenn zumindest ein Zustand als derart bewertet wird, dass eine Aktion eines Maschinenbedieners wünschenswert, insbesondere empfehlenswert, ist,
**dadurch gekennzeichnet,**
- **dass** durch die Steuereinheit (40) bei einem Hinweis automatisch oder auf Anforderung eines Maschinenbedieners ein graphisches Datencodeelement (55), insbesondere ein Barcode, ein Pixelcode oder Ähnliches, zu dem festgestellten Zustand erzeugt und auf einer Anzeigeeinrichtung (50), insbesondere einem Monitor, angezeigt wird, und
- **dass** das graphische Datencodeelement (55) mit einer elektronischen Kamera einer mobilen Computereinheit (60), insbesondere einem Smartphone oder einem Tablet-Computer, erfasst wird, wobei durch die mobile Computereinheit (60) basierend auf dem erfassten graphischen Datencodeelement (55) weitere Informationen (65) zu dem Zustand angegeben werden.

2. Verfahren nach Anspruch 1,
**dadurch gekennzeichnet,**
**dass** die mobile Computereinheit (60) einen Datenspeicher (70) aufweist, auf welchem Informationen zum Zustand gespeichert sind und bei Erfassen eines zugehörigen graphischen Datencodeelements (55) aus dem Datenspeicher (70) abgerufen und an der mobilen Computereinheit (60) oder einer damit in Verbindung stehenden Anzeigeeinrichtung angezeigt werden.

3. Verfahren nach Anspruch 1 oder 2,
**dadurch gekennzeichnet,**
**dass** die mobile Computereinheit (60) eine Funkverbindungseinrichtung, insbesondere für einen Mobilfunk, aufweist, mit welcher eine Verbindung zu einem entfernten Datenspeicher hergestellt wird, aus welchem Informationen zu dem festgestellten Zustand abgerufen werden.

4. Verfahren nach einem der Ansprüche 1 bis 3,
**dadurch gekennzeichnet,**
**dass** in dem graphischen Datencodeelement (55) unmittelbar Daten zu dem festgestellten Zustand hinterlegt werden.

5. Verfahren nach einem der Ansprüche 1 bis 4,
**dadurch gekennzeichnet,**
**dass** das graphische Datencodeelement (55) Daten zu einem Internet-Link enthält, über welchen mittels der mobilen Computereinheit (60) weitere Informationen (65) zu dem festgestellten Zustand aus einem entfernten Datenspeicher abgefragt werden können.

6. Verfahren nach einem der Ansprüche 1 bis 5,
**dadurch gekennzeichnet,**
**dass** die weiteren Informationen Informationen zu einer Zustandsursache und/oder zum Beheben eines festgestellten Fehlers oder Zustandes umfassen.

7. Verfahren nach einem der Ansprüche 1 bis 6,
**dadurch gekennzeichnet,**
**dass** die weiteren Informationen Texte, Graphiken, Bilder und/oder Audio- und/oder Videodaten umfassen.

8. Verfahren nach einem der Ansprüche 1 bis 7,
**dadurch gekennzeichnet,**
**dass** die weiteren Informationen auf der mobilen Computereinheit (60) ausgegeben werden, insbesondere auf einem Display der mobilen Computereinheit (60) optisch angezeigt und/oder mit einem Lautsprecher akustisch ausgegeben werden.

9. Verfahren nach einem der Ansprüche 1 bis 8,
**dadurch gekennzeichnet,**
**dass** die mobile Computereinheit (60) nach dem Erfassen des graphischen Datencodeelementes (55) zur Behebung des festgestellten Fehlers, insbesondere an einen Ort außerhalb des Bedienstandes, mitgeführt wird.

10. Verfahren nach einem der Ansprüche 1 bis 9,
**dadurch gekennzeichnet,**
**dass** als graphisches Datencodeelement (55) ein Pixelcode, insbesondere ein QR-Code, ein Frame-Code, ein Aztec-Code oder Ähnliches, verwendet wird.

11. Anordnung umfassend eine Tiefbaumaschine (10) zum Durchführen eines Verfahrens nach einem der Ansprüche 1 bis 10 und mindestens eine mobile Computereinheit (60), wobei die Tiefbaumaschine (10) versehen ist mit
- einem mobilen Trägergerät (15),
- einem Mast (18) oder Auslegerarm, welcher an dem Trägergerät (15) angeordnet ist,
- einem Tiefbauwerkzeug (34), welches zum Ausführen einer Tiefbaumaßnahme an dem Mast (18) oder Auslegerarm verstellbar ist,
- einer Steuereinheit (40), welche zum Bewerten von erfassten Betriebszuständen und/oder Zuständen von Komponenten der Tiefbaumaschine (10) ausgebildet ist, wobei durch die Steuereinheit (40) ein Hinweis ausgebbar ist, wenn zumindest ein Zustand als derart bewertet wird, dass eine Aktion eines Maschinenbedieners wünschenswert, insbesondere empfehlenswert, ist
wobei
- die Steuereinheit (40) ausgebildet ist, bei einem Hinweis automatisch oder auf Anforderung eines Maschinenbedieners ein graphisches Datencodeelement (55), insbesondere einen Barcode oder einen Pixel-code, zu dem festgestellten Zustand zu erzeugen und auf einer Anzeigeeinrichtung (50) anzuzeigen, und
- die mindestens eine mobile Computereinheit (60) ausgebildet ist, ein graphisches Datencodeelement (55), welches von der Steuereinheit (40) zu einem Hinweis erzeugt ist, auf einer Anzeigeeinrichtung (50), insbesondere einem Monitor, der Tiefbaumaschine (10) zu erfassen und basierend auf dem erfassten graphischen Datencodeelement (55) weitere Informationen (65) hierzu anzuzeigen. - .

12. Anordnung nach Anspruch 11,
**dadurch gekennzeichnet,**
**dass** die Tiefbaumaschine (10) als ein Bohrgerät, eine Schlitzwandfräsvorrichtung, eine Ramme, ein Seilbagger, ein Greiferbagger und/oder ein Rüttler ausgebildet ist.

13. Anordnung nach Anspruch 11 oder 12, **dadurch gekennzeichnet , dass** die mobile Computereinheit (60) ein Smartphone oder ein Tablet-Computer ist.

14. Anordnung nach einem der Ansprüche 11 bis 13,
**dadurch gekennzeichnet,**
**dass** die mobile Computereinheit (60) eine elektronische Kamera aufweist, mit welcher das graphische Datencodeelement (55) erfassbar ist.

## Claims

1. Method for operating a civil engineering machine (10) having
- a mobile carrier device (15),
- a mast (18) or a boom arm, which is arranged on the carrier device (15),
- a civil engineering tool (34), which is adjustable on the mast (18) or the boom arm in order to carry out a civil engineering measure,
- a control unit (40), which is designed to evaluate detected operating states and/or states of components of the civil engineering machine (10), wherein an indication, in particular an error indication, is output by the control unit (40) if at least one state is assessed as such that an action by a machine operator is desirable, in particular recommendable,
**characterised in that**
- the control unit (40) generates a graphic data code element (55), in particular a barcode, a pixel code or the like, for the detected state automatically in response to an indication or at the request of a machine operator and displays it on a display device (50), in particular a monitor, and
- **in that** the graphic data code element (55) is detected with an electronic camera of a mobile computer unit (60), in particular a smartphone or a tablet computer, wherein further information (65) about the state is provided by the mobile computer unit (60) based on the captured graphic data code element (55).

2. Method according to claim 1,
**characterised in that**
the mobile computer unit (60) has a data memory (70) on which information on the status is stored and, when an associated graphic data code element (55) is detected, is retrieved from the data memory (70) and displayed on the mobile computer unit (60) or on a display device connected thereto.

3. Method according to claim 1 or 2,
**characterised in that**
the mobile computer unit (60) has a radio connection device, in particular for a mobile radio, with which a connection is established to a remote data memory from which information on the detected state is retrieved.

4. Method according to any one of claims 1 to 3,
**characterised in that**
data on the detected state is stored directly in the graphic data code element (55).

5. Method according to any one of claims 1 to 4,
**characterised in that**
the graphic data code element (55) contains data relating to an internet link via which further information (65) on the detected state can be retrieved from a remote data memory by means of the mobile computer unit (60).

6. Method according to any one of claims 1 to 5,
**characterised in that**
the further information comprises information on the cause of a state and/or on the rectification of a detected fault or state.

7. Method according to any one of claims 1 to 6,
**characterised in that**
the further information comprises text, graphics, images and/or audio data and/or video data.

8. Method according to any one of claims 1 to 7,
**characterised in that**
the further information is output on the mobile computer unit (60), in particular is displayed visually on a display of the mobile computer unit (60) and/or is output acoustically using a loudspeaker.

9. Method according to any one of claims 1 to 8,
**characterised in that**
the mobile computer unit (60) is carried along after the graphic data code element (55) has been detected in order to rectify the detected error, in particular to a location outside the control station.

10. Method according to any one of claims 1 to 9,
**characterised in that**
a pixel code, in particular a QR code, a frame code, an Aztec code or the like, is used as the graphic data code element (55).

11. Assembly comprising a civil engineering machine (10) for carrying out a method according to any one of claims 1 to 10, and at least one mobile computer unit (60), wherein the civil engineering machine (10) is provided with
- a mobile carrier device (15),
- a mast (18) or a boom arm, which is arranged on the carrier device (15),
- a civil engineering tool (34), which is adjustable on the mast (18) or the boom arm in order to carry out a civil engineering measure,
- a control unit (40), which is designed to evaluate detected operating states and/or states of components of the civil engineering machine (10), wherein an indication can be output by the control unit (40) if at least one state is assessed as such that an action by a machine operator is desirable, in particular recommendable,
wherein
- the control unit (40) is designed to generate a graphic data code element (55), in particular a barcode or a pixel code, for the detected state automatically in response to an indication or at the request of a machine operator and to display it on a display device (50), and
- the at least one mobile computer unit (60) is designed to detect a graphic code element (55), which is generated by the control unit (40) to form an indication, on a display device (50), in particular a monitor, of the civil engineering machine (10) and to display further information (65) relating thereto based on the detected graphic data code element (55).

12. Assembly according to claim 11,
**characterised in that**
the civil engineering machine (10) is designed as a drilling unit, a trench cutter, a pile driver, a cable excavator, a grab excavator and/or a vibrator.

13. Assembly according to claim 11 or 12,
**characterised in that**
the mobile computer unit (60) is a smartphone or a tablet computer.

14. Assembly according to any one of claims 11 to 13,
**characterised in that**
the mobile computer unit (60) has an electronic camera, with which the graphic data code element (55) can be detected.

## Revendications

1. Procédé pour faire fonctionner une machine de génie civil (10) avec
- un engin porteur mobile (15),
- un mât (18) ou un bras de flèche, qui est agencé sur l'engin porteur (15),
- un outil de génie civil (34), qui est réglable sur le mât (18) ou le bras de flèche pour l'exécution d'une mesure de génie civil,
- une unité de commande (40), qui est réalisée pour évaluer des états de fonctionnement et/ou des états de composants détectés de la machine de génie civil (10), une indication, notamment une indication d'erreur, étant émise par l'unité de commande (40) lorsqu'au moins un état est évalué comme étant tel qu'une action d'un opérateur de machine est souhaitable, notamment recommandée,
**caractérisé en ce que**
- l'unité de commande (40) génère, en cas d'indication, automatiquement ou sur demande d'un opérateur de machine, un élément de code de données graphique (55), notamment un code à barres, un code pixel ou similaire, concernant l'état constaté et l'affiche sur un appareil d'affichage (50), notamment un moniteur, et
- **en ce que** l'élément de code de données graphique (55) est détecté par une caméra électronique d'une unité informatique mobile (60), notamment d'un téléphone intelligent ou d'un ordinateur-tablette, des informations supplémentaires (65) concernant l'état étant indiquées par l'unité informatique mobile (60) sur la base de l'élément de code de données graphique (55) détecté.

2. Procédé selon la revendication 1,
**caractérisé en ce que**
l'unité informatique mobile (60) présente une mémoire de données (70) dans laquelle des informations concernant l'état sont stockées et sont récupérées de la mémoire de données (70) lors de la détection d'un élément de code de données graphique (55) associé et affichées sur l'unité informatique mobile (60) ou sur un appareil d'affichage en liaison avec celle-ci.

3. Procédé selon la revendication 1 ou 2,
**caractérisé en ce que**
l'unité informatique mobile (60) présente un appareil de liaison radio, notamment pour une téléphonie mobile, avec lequel une liaison est établie avec une mémoire de données distante, à partir de laquelle des informations concernant l'état constaté sont récupérées.

4. Procédé selon l'une quelconque des revendications 1 à 3,
**caractérisé en ce que**
des données concernant l'état constaté sont directement enregistrées dans l'élément de code de données graphique (55).

5. Procédé selon l'une quelconque des revendications 1 à 4,
**caractérisé en ce que**
l'élément de code de données graphique (55) contient des données concernant un lien Internet par l'intermédiaire duquel des informations supplémentaires (65) concernant l'état constaté peuvent être extraites d'une mémoire de données distante au moyen de l'unité informatique mobile (60).

6. Procédé selon l'une quelconque des revendications 1 à 5,
**caractérisé en ce que**
les informations supplémentaires comprennent des informations concernant une cause de l'état et/ou concernant la correction d'une erreur ou d'un état constaté.

7. Procédé selon l'une quelconque des revendications 1 à 6,
**caractérisé en ce que**
les informations supplémentaires comprennent des textes, des graphiques, des images et/ou des données audio et/ou vidéo.

8. Procédé selon l'une quelconque des revendications 1 à 7,
**caractérisé en ce que**
les informations supplémentaires sont émises sur l'unité informatique mobile (60), notamment affichées visuellement sur un écran de l'unité informatique mobile (60), et/ou sont émises acoustiquement par un haut-parleur.

9. Procédé selon l'une quelconque des revendications 1 à 8,
**caractérisé en ce qu'**
après la détection de l'élément de code de données graphique (55), l'unité informatique mobile (60) est emportée pour corriger l'erreur constatée, notamment en un lieu extérieur au poste de commande.

10. Procédé selon l'une quelconque des revendications 1 à 9,
**caractérisé en ce que**
comme élément de code de données graphique (55) est utilisé un code pixel, notamment un code QR, un code Frame, un code Aztec ou similaire.

11. Agencement comprenant une machine de génie civil (10) pour exécuter un procédé selon l'une quelconque des revendications 1 à 10 et au moins une unité informatique mobile (60), la machine de génie civil (10) étant pourvue
- d'un engin porteur mobile (15),
- d'un mât (18) ou d'un bras de flèche qui est agencé sur l'engin porteur (15),
- d'un outil de génie civil (34), qui est réglable sur le mât (18) ou le bras de flèche pour exécuter une mesure de génie civil,
- d'une unité de commande (40) qui est réalisée pour évaluer des états de fonctionnement et/ou des états de composants détectés de la machine de génie civil (10), une indication pouvant être émise par l'unité de commande (40) lorsqu'au moins un état est évalué comme étant tel qu'une action d'un opérateur de machine est souhaitable, notamment recommandée,
- l'unité de commande (40) étant réalisée pour générer, en cas d'indication, automatiquement ou sur demande d'un opérateur de machine, un élément de code de données graphique (55), notamment un code à barres ou un code pixel, concernant l'état constaté et pour l'afficher sur un appareil d'affichage (50), et
- l'au moins une unité informatique mobile (60) étant réalisée pour détecter un élément de code de données graphique (55), qui est généré par l'unité de commande (40) pour une indication, sur un appareil d'affichage (50), notamment un moniteur, de la machine de génie civil (10) et pour afficher des informations supplémentaires (65) le concernant sur la base de l'élément de code de données graphique (55) détecté.

12. Agencement selon la revendication 11,
**caractérisé en ce que**
la machine de génie civil (10) est réalisée sous la forme d'une foreuse, d'un dispositif de fraisage de parois moulées, d'un marteau-pilon, d'une pelle à câble, d'une pelle à benne preneuse et/ou d'un vibrateur.

13. Agencement selon la revendication 11 ou 12,
**caractérisé en ce que**
l'unité informatique mobile (60) est un téléphone intelligent ou un ordinateur-tablette.

14. Agencement selon l'une quelconque des revendications 11 à 13,
**caractérisé en ce que**
l'unité informatique mobile (60) présente une caméra électronique avec laquelle l'élément de code de données graphique (55) peut être détecté.
